# EUROPEAN PATENT SPECIFICATION

(11) **EP 3 317 707 B1**
(45) Date of publication and mention of the grant of the patent: **06.05.2020**
(21) Application number: 15739022.0
(22) Date of filing: 30.06.2015
(51) Int. Cl.: G02B 6/44

(54) **OPTICAL TERMINATION BOX AND ASSEMBLY**
OPTISCHE ANSCHLUSSDOSE UND BAUGRUPPE
BOÎTIER DE RÉPARTITION OPTIQUE ET ENSEMBLE

(43) Date of publication of application: 09.05.2018
(73) Proprietor: Prysmian S.p.A., 20126 Milano (IT)
(72) Inventor: ABBIATI, Fabio, 20126 Milan (IT)
(74) Representative: Perani & Partners S.p.A.
(86) International application number: PCT/IB2015/054914
(87) International publication number: WO 2017/001893

(56) References cited:
- EP-A1- 2 241 915
- WO-A1-2010/088202
- WO-A2-2009/120280
- US-A1- 2013 209 049

## Description

### Field of the invention

The present invention relates to the field of equipment and components for the installation of optical cables in optical access networks. In particular, the present invention relates to an optical termination box and an optical termination assembly.

### Background of the invention

A FTTH ("Fiber To The Home") network is an optical access network providing a number of end customers with broadband communication services from operators, i.e. with services requiring data transmission at a very high rate, for example of some Mbit/s.

Typically, a FTTH network comprises a central unit which is connected with one or more distribution boxes which are typically located in the basement of the building where the end customers reside.

From the distribution box, the final customer can be directly reached by an optical cable, hereinafter referred to as "drop cable".

Alternatively, when the distribution box is located in a building having multi dwelling units, for example arranged in a plurality of floors, intermediate optical modules are installed at each floor for receiving an optical cable, hereinafter referred to as "riser cable", which exits the distribution box and runs vertically through the building from the basement up to all the building floors. Typically, riser cables may contains up to 96 optical fibers. The connection between the intermediate optical modules and the customer's residence is then performed with drop cables.

Typically, drop cables are pre-connectorized (which means that at least one end of the cable is equipped with an optical connector, factory assembled and tested), in order to allow quick and easy connection, without need of qualified operators to make the connection between customer's residence and distribution box.

The connectorized end of the drop cable is typically housed in an optical termination box located in the apartment of an end user.

WO 2011/076275 discloses an optical termination box and a pre-connectorized drop cable. The optical termination box has a base, a rotatable splice tray and a cover. Between the base and the splice tray a first compartment is defined where the pre-connectorized end of the drop cable is housed with the optical fibers connected with corresponding optical connectors.

Between the base and a support structure (wall or mounting plate) a second compartment is defined where the extra length of the pre-connectorized drop cable is housed so that the optical termination box can be mounted without opening it thereby the risk that the operator might damage the content of the optical termination box during installation is minimized.

US 2013/0209049 discloses a fiber optic enclosure including a housing. The housing includes a base and a cover that cooperates to define an interior region. The cover is pivotally coupled to the base and it can be moved between a closed position and an open position. The cover comprises a front defining openings through which cables may extend. The openings are shaped as elongated slots in the front extending in a top-bottom direction.

EP 2 241 915 discloses a fiber optic termination module including a housing. The termination module defines an open front closed off by a first smaller door and a second larger door. The second door defines a main panel and is rotatably mounted to a side of the housing. The main panel includes a plurality of rows of slots, each sized for holding an adapter.

WO 2010/088202 discloses a fiber optic enclosure assembly including an enclosure having a base and a cover connected to the base. The base and the cover cooperate to define an interior region. Cable ports are provided on the base for passage of cables.

### Summary of the invention

The Applicant has observed that, with the solution proposed in WO 2011/076275, access to the second compartment, that is the compartment where the extra length of the pre-connectorized drop cable is arranged, is only possible after the optical termination assembly has been dismounted from its mounting plate or wall. However, removal of the optical termination assembly may be not advisable when the property and warranty of the assembly is not in charge with the appointed operator.

In view of the above, the Applicant has tackled the problem of providing an optical termination box where access to the pre-connectorized optical cable is allowed without dismounting the optical termination box from the mounting plate or wall.

The Applicant has found that by providing an optical termination box fixable to a support or a wall and defining a pre-connectorized optical cable housing compartment in which externally accessible optical connectors of a pre-connectorized optical cable are housed on a rotatable connectors bearing panel, access to underlying optical cable is made possible while leaving the termination box in place.

Therefore, the present invention relates to an optical termination box as defined by the subject matter of claim 1.

Advantageously, with this solution it is also possible to scale out the number of the optical connectors of the box provided that the overall dimensions of the termination box are maintained.

Preferably, in the closed panel position, a first surface of the connectors bearing panel faces the bottom of the base.

Preferably, when the connectors bearing panel is in the closed position, the optical connectors are arranged in front of the opening, whereby access from outside to the optical connectors is allowed.

Preferably, a splice tray is rotatably attached to the base and configured to rotate between a closed tray position and an open tray position, in the closed tray position, the splice tray at least partially covers the second surface of the connectors bearing panel forming a second compartment, in the open tray position, the splice tray allows access to the second surface of the connectors bearing panel.

Preferably, the connectors bearing panel forms a fibers passageway for passage of a plurality of optical fibers between the first compartment and the second compartment.

Preferably, the plurality of connector supporting frames comprises a first group of connectors supporting frames and a second group of connectors supporting frame, the first group of connector supporting frames is provided on the first surface of the panel and the second group of connector supporting frames is provided on the second surface of the panel thereby access to the second group of connector supporting frames is allowed in the closed and open panel positions and access to the first group of connector supporting frames is allowed only in the open panel position.

The present invention also relates to an optical termination assembly comprising an optical termination box, a pre-connectorized optical cable having an end portion housed in the optical termination box, the end portion comprising a plurality of optical fibers connected with a corresponding plurality of optical connectors.

### Brief description of the drawings

The present invention will now be described in more detail hereinafter with reference to the accompanying drawings, in which some embodiments of the invention are shown.
FIG. 1 is a perspective view of an optical termination assembly according to a first embodiment of the invention,
FIG. 2 is perspective view of the optical termination assembly of FIG. 1 with the cover removed,
FIG. 3 is perspective view of the optical termination assembly of FIG. 2 with the splice tray in the open tray position,
FIG. 4 is perspective view of the optical termination assembly of FIG. 3 with the connectors bearing panel in the open panel position,
FIG. 5 is perspective view of an optical termination assembly according to a second embodiment of the invention with the cover removed,
FIG. 6 is perspective view of the optical termination assembly of FIG. 5 with the connectors bearing panel in the open panel position.

### Detailed description

For the purposes of the present description and claims an optical cable is deemed to be an optical cable comprising one or more optical fibers, possibly arranged inside one or more buffer tubes, an outer sheath and, optionally, one or more strength members.

An optical fiber typically comprises an optical waveguide, constituted by an optically transmissive core, surrounded by a cladding. The optical waveguide is preferably covered by at least one protective coating layer ("coating"). Typically two protective coating layers are present: the first coating layer ("primary coating") is in direct contact with the optical waveguide, while the second coating layer ("secondary coating") covers the primary coating. In addition, a buffer layer may cover the optical fiber: the buffer layer may be substantially in contact with the secondary coating of the optical fiber ("tight buffer") or it may consist of a small tube housing one or more optical fibers ("loose buffer").

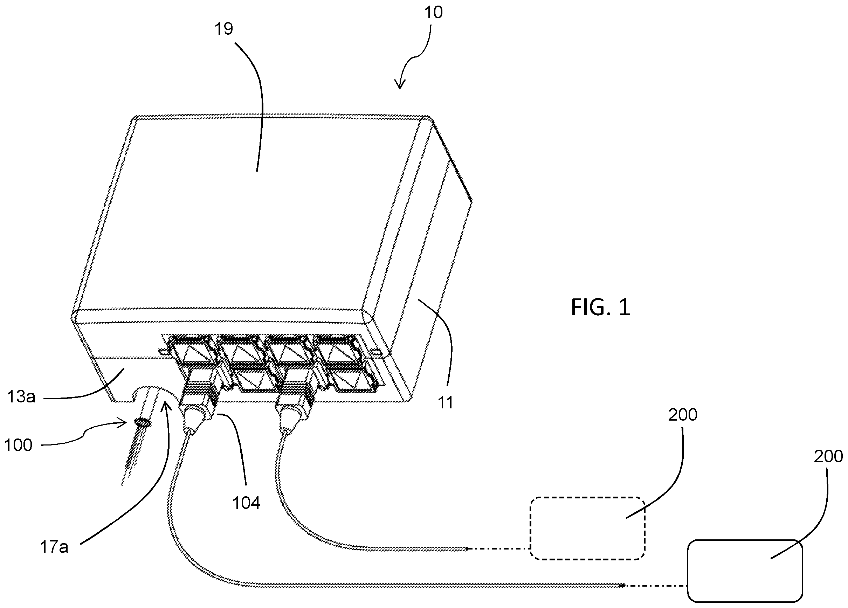

Figure 1 shows an optical termination assembly 1 comprising an optical termination box 10 and a pre-connectorized optical cable 100, in the example a pre-connectorized drop cable.

A pre-connectorized optical cable is generally an optical cable having an end portion, in particular one or more optical fibers contained therein, pre-terminated with an optical connector. Alternatively, a pre-connectorized optical cable can comprise only a group of pre-terminated optical fibers contained therein.

The pre-connectorized optical cable 100 has an end portion 100a housed in the optical termination box 10. This end portion 100a comprises a plurality of optical fibers 101 where each optical fiber 101 is connected with a respective optical connector 102 to be connected with a corresponding end user optical connector. The optical connectors 102 may be SC connectors, FC connectors or the like.

With reference to the example shown in figure 1, the optical termination box 10 comprises a base 11 and a cover 19 removably attached to the base 11.

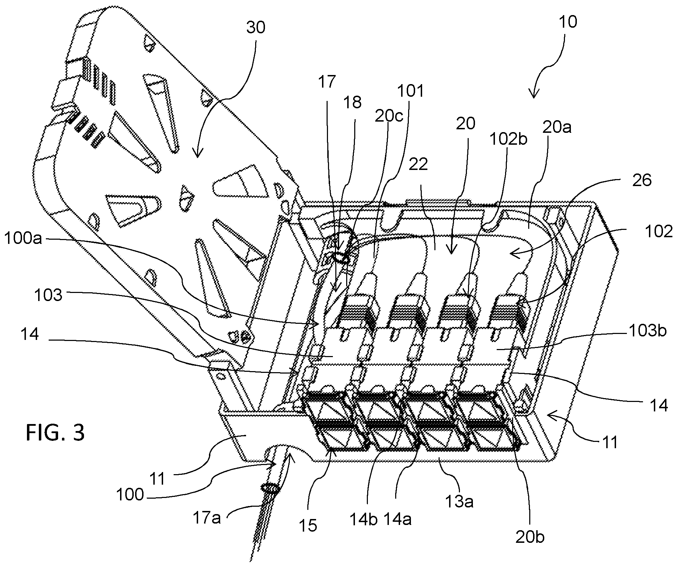

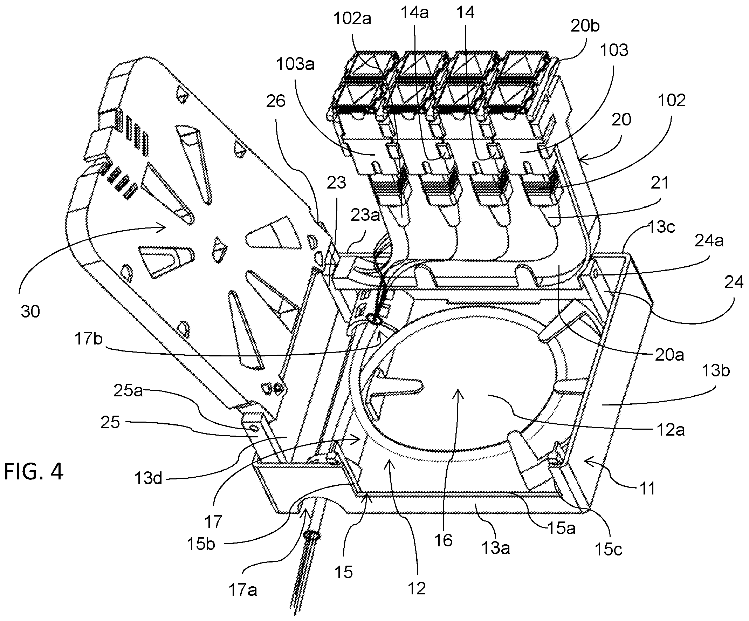

The base 11 comprises a bottom 12 and four side walls 13a, 13b, 13c, 13d. The side walls 13a, 13b, 13c, 13d project from the bottom 12 substantially perpendicular to the bottom 12, as shown in the example of figure 3 and 4.

The bottom 12 has a first surface 12a facing the cover 19, when the cover 19 is applied to the base 11, and a second surface (not shown) opposite to the first surface 12a. The second surface has fixing elements accessible from outside and configured to cooperate with corresponding fixing elements of an adapter for fixing the base 11 to this adapter or directly to a wall.

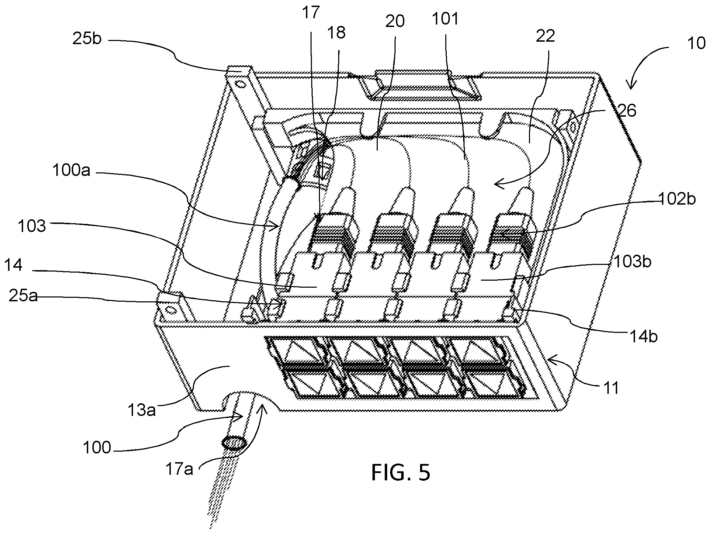

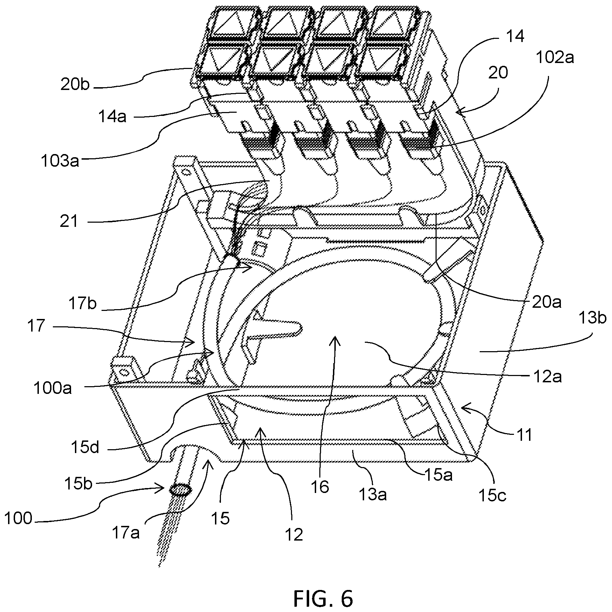

The optical termination box 10 comprises a connectors bearing panel 20 rotatably attached to the base 11 between a closed panel position (figures 3 and 5) and an open panel position (figures 4 and 6). Preferably, the connectors bearing panel 20 is rotatably hinged to the base 11 around a hinge axis extending parallel to the bottom 12. To this purpose, the base 11 has two stems 23, 24 projecting from the bottom 12, in particular from the first surface 12a of the bottom 12, and provided with two holes 23a, 24a for receiving two respective pins formed on a first edge 20a of the connectors bearing panel 20 to hinge the connectors bearing panel 20 to the base 11.

Preferably, the connectors bearing panel 20 is a plate of polymeric material with a substantially rectangular shape extended from the first edge 20a to an opposite second edge 20b, substantially parallel to the first edge 20a .

The connectors bearing panel 20 is provided with a plurality of connector supporting frames 14, each connector supporting frame 14 supporting a respective optical connector 102.

Preferably, an optical adapter 103 is removably attached to a connector supporting frame 14 to allow a connection between the supported optical connector 102 and an end user optical connector 104, for example the optical connector 104 received from one or more modems 200 of the end user.

With reference to the example shown in figure 6, an opening 15 is formed in the side wall 13a for allowing connection from outside between the end user optical connectors and the optical connectors 102. In particular, in the closed panel position, the end user optical connectors pass through the opening 15 to connect to the optical connectors 102 through the optical adapters 103.

The connectors bearing panel 20 has a first surface 21 and an opposite parallel second surface 22.

In the closed panel position, the connectors bearing panel 20 is positioned so that the first surface 21 forms a first compartment 16 with the bottom 12 of the base 11 and the connectors bearing panel 20 at least partially covers this first compartment 16. In particular, in the closed panel position, the first surface 21 of the connectors bearing panel 20 faces the bottom 12, namely the first surface 12a of the bottom 12.

In the open panel position, the connectors bearing panel 20 is positioned so that it allows access to the first compartment 16. As it will be described in the detail herein after, this first compartment 16 defines a compartment for storing a part or an extra length of the pre-connectorized optical cable 100 housed in the optical termination box 10.

Moreover, in the closed panel position, the connectors bearing panel 20 is positioned so that it allows access only to the second surface 22 while, in the open panel position, the connectors bearing panel 20 is positioned so that it allows access to the first surface 21 and the second surface 22. This aspect will be described in the detail herein after.

In the open panel position, the connectors bearing panel 20 is disengaged from the opening 15, while, in the closed panel position, the connectors bearing panel 20 is arranged relative to the opening 15 to allow passage of the end user optical connectors through this opening 15 for connecting the end user optical connectors with the optical connectors 102 through the optical adapters 103.

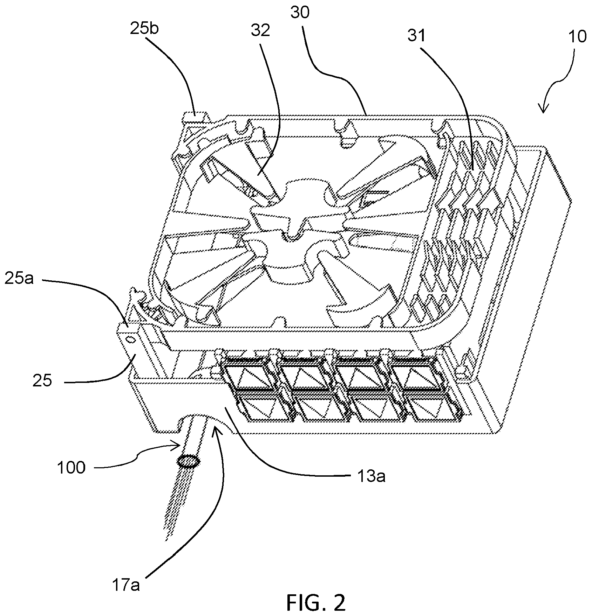

According to the embodiment shown in figures 1-4, the opening 15 is defined by a bottom edge 15a and two opposite lateral edges 15b, 15c formed in the side wall 13a wherein the opening 15 is opened on the top. In this embodiment, when the connectors bearing panel 20 is in the closed panel position, the second edge 20b of the panel 20 is positioned within the opening 15. Preferably, in the closed panel position, this second edge 20b of the connectors bearing panel 20 engages the opening 15 resting substantially flush with the side wall 13a of the base 11 defining the opening 15.

According to the embodiment shown in figures 5-6, the opening 15 is defined by a bottom edge 15a, two opposite lateral edges 15b, 15c and a top edge 15d, formed in the side wall 13a. With this embodiment, when the connectors bearing panel 20 is in the closed panel position, the second edge 20b of the panel 20 is positioned behind the opening 15, inside the base 11.

The bottom 12 comprises a cable passageway 17 for passage of the pre-connectorized optical cable 100 from outside to the first compartment 16. More preferably, the cable passageway 17 extends between two side walls, in the example shown in the figures between the side wall 13a and the side wall 13c. A first side cable passageway 17a is formed in the side wall 13a, in particular in the bottom of the side wall 13a, and a second side cable passageway 17b is formed in the side wall 13c in particular in the bottom of the side wall 13c. The two side cable passageways 17a,17b communicate with the cable passageway 17 to allow the pre-connectorized drop cable 100 to enter and exit the optical termination box 10 parallel to the bottom 12, i.e. perpendicular to the side wall 13a.

With reference to the example shown in figures 3 and 5, the connectors bearing panel 20 forms a fibers passageway 18 with one of the four side walls, in the example with the side wall 13d, for passage of the optical fibers 101 of the pre-connectorized optical cable 100 from the first compartment 16 to the second surface 22.

In particular, the connectors bearing panel 20 has a side edge 20c which, in the closed panel position, forms the fibers passageway 18 with the side wall 13d.

According to a first embodiment, the connector supporting frames 14 comprise a first group of connectors supporting frames 14a and a second group of connectors supporting frames 14b.

The first group of connectors supporting frames 14a supports a respective first group of optical adapters 103a able to receive a first group of optical connectors 102 of the pre-connectorized drop cable 100 and the second group of connectors supporting frames 14b supports a respective second group of adapters 103b able to receive a first group of optical connectors 102 of the pre-connectorized drop cable 100.

The first group of connector supporting frames 14a is provided on the first surface 21 and the second group of connector supporting frames 14b is provided on the second surface 22. Since in the closed panel position the connectors bearing panel 20 is positioned so that it allows access only to the second surface 22 while in the open panel position the connectors bearing panel 20 is positioned so that it allows access to both the first surface 21 and the second surface 22, access to the second group of connector supporting frames 14b and the respective second group of optical adapters 103b and connectors 102b is allowed in the closed and open panel positions while access to the first group of connector supporting frames 14a and the respective first group of optical adapters 103a connectors 102a is allowed only in the open panel position.

Preferably, the first group of optical connectors 102a has four optical connectors and the second group of optical connectors 102b has four optical connectors.

In the figures, each connector supporting frame 14 comprises a snap engagement member configured to snap engage an optical connector 102 or the optical adapter 103 supporting an optical connector 102. The snap engagement members 14, in the example the snap engagement members 14a, 14b of the first and second group of connector supporting frames, protrude from the first surface 21 and the second surface 22 of the connectors bearing panel 20.

According to a second embodiment, the connector supporting frames 14 comprise only one group of connectors supporting frames provided on the first surface 21 or on the second surface 22. In this embodiment the snap engagement members 14 protrude from the first surface 21 or the second surface 22 of the connectors bearing panel 20.

Preferably, the optical termination box 10 also comprises a splice tray 30 rotatably attached to the base 11 between a closed tray position and an open tray position. According to one embodiment, the splice tray 30 is rotatably hinged to the base 11 around a hinge axis extending parallel to the bottom 12 and, preferably, perpendicular to the hinge axis of the connectors bearing panel 20. In particular, the base 11 has two stems 25a, 25b projecting from the bottom 12, in particular from the first surface 12a of the bottom 12, and provided with two holes, in the figure only the hole 25a of the stem 25 is visible, receiving two respective pins formed on a first end portion 30a of the splice tray 30 to splice tray 30 to the base 11.

In the closed tray position, the splice tray 30 at least partially covers the second surface 22 of the connectors bearing panel 20 forming a second compartment 26 and in the open tray position, the splice tray 30 allows access to the second surface 22. The fibers passageway 18 allows passage of the optical fibers 101 between the first compartment 16 and the second compartments 26.

Preferably, the splice tray 30 has a substantially rectangular shape with rounded corners. The splice tray 30 comprises a plurality of splice holders 31 and fiber winding members 32.

## Claims

1. An optical termination box (10) comprising:
- a base (11) with a bottom (12) and side walls (13a,13b,13c,13d),
- a plurality of connector supporting frames (14) configured to support optical connectors (102) of a pre-connectorized optical cable (100) having a plurality of optical fibers (101),
- an opening (15) formed in one of the side walls (13a) for allowing access from outside to said optical connectors (102),
- a connectors bearing panel (20) holding the plurality of connector supporting frames (14) and being rotatably attached to the base (11) between a closed panel position and an open panel position, the connectors bearing panel (20) having a first surface (21) and an opposite second surface (22),
wherein in the closed panel position, the first surface (21) of the connectors bearing panel (20) forms a first compartment (16) with the bottom (12) of the base (11), and in the open panel position, the connectors bearing panel (20) allows access to the first compartment (16) and to the pre-connectorized optical cable (100) and the connectors bearing panel is disengaged from the opening,
- the bottom (12) comprises a cable passageway (17) for passage of an end portion (100a) of the pre-connectorized optical cable (100) from outside the optical termination box (10) to the first compartment (16),
**characterised in that**:
- in the closed panel position, the connectors bearing panel (20) is arranged relative to the opening (15) to allow passage of one or more end user optical connectors through the opening (15), and the connectors bearing panel (20) forms a fibers passageway (18) with at least one of the side walls (13d), for passage of optical fibers (101) of the pre-connectorized optical cable (100) from the first compartment (16) to the second surface (22).

2. The optical termination box (10) according to claim 1, wherein, in the closed panel position, the first surface (21) of the connectors bearing panel (20) faces the bottom (12) of the base (11).

3. The optical termination box (10) according to any of claims 1 to 2, wherein:
- when the connectors bearing panel (20) is in the closed position, the optical connectors (102) are arranged in front of the opening (15), whereby access from outside to the optical connectors (102) is allowed.

4. The optical termination box (10) according to any of claims 1 to 3, wherein:
- a splice tray (30) is rotatably attached to the base (11) and configured to rotate between a closed tray position and an open tray position,
- in the closed tray position, the splice tray (30) at least partially covers the second surface (22) of the connectors bearing panel (20) forming a second compartment (26),
- in the open tray position, the splice tray (30) allows access to the second surface (22) of the connectors bearing panel (20).

5. The optical termination box (10) according to claim 4, wherein: the fibers passageway (18) is arranged for passage of a plurality of optical fibers (101) between the first compartment (16) and the second compartment (26).

6. The optical termination box (10) according to any of claims 1 to 5, wherein
- the plurality of connector supporting frames (14) comprises a first group of connectors supporting frames (14a) and a second group of connectors supporting frames (14b),
- the first group of connector supporting frames (14a) is provided on the first surface (21) of the connectors bearing panel (20) and the second group of connector supporting frames (14b) is provided on the second surface (22) of the connectors bearing panel (20), whereby access to the second group of connector supporting frames (14b) is allowed in the closed and open panel positions and access to the first group of connector supporting frames (14a) is allowed only in the open panel position.

7. An optical termination assembly (1) comprising:
- an optical termination box (10) according to any claims 1 to 6,
- a pre-connectorized optical cable (100) having an end portion (100a) housed in the optical termination box (10), the end portion (100a) comprising a plurality of optical fibers (101) connected with a corresponding plurality of optical connectors (102).
wherein - the plurality of connector supporting frames (14) supports the plurality of optical connectors (102),

8. The optical termination assembly (1) according to claim 7, wherein
- the plurality of connector supporting frames (14) comprises a first group of connectors supporting frames (14a) and a second group of connectors supporting frames (14b) supporting respectively a first group of optical connectors (102a) and a second group of optical connectors (102b) of the plurality of optical connectors (102),
- the first group of connector supporting frames (14a) is provided on the first surface (21) and the second group of connector supporting frames (14b) is provided on the second surface (22), whereby access to the second group of connector supporting frames (14b) and respective second group of optical connectors (102b) is allowed in the closed and open panel positions and access to the first group of connector supporting frames (14a) and respective first group of optical connectors (102a) is allowed only in the open panel position.

## Patentansprüche

1. Optische Anschlussbox (10), umfassend:
- eine Basis (11) mit einem Boden (12) und Seitenwänden (13a, 13b, 13c, 13d),
- mehrere Verbinderstützrahmen (14), die konfiguriert sind, um optische Verbinder (102) eines vorverbundenen optischen Kabels (100) mit mehreren optischen Fasern (101) zu tragen;
- eine Öffnung (15), die in einer der Seitenwände (13a) ausgebildet ist, um den Zugang von außen zu den optischen Verbindern (102) zu ermöglichen;
- eine Verbindungslagerplatte (20), die die mehreren Verbinderstützrahmen (14) hält und drehbar an der Basis (11) zwischen einer geschlossenen Plattenposition und einer offenen Plattenposition angebracht ist, wobei die Verbindungslagerplatte (20) eine erste Oberfläche aufweist (21) und eine gegenüberliegende zweite Fläche (22), wobei in der geschlossenen Plattenposition die erste Oberfläche (21) der Verbindungslagerplatte (20) ein erstes Fach (16) mit dem Boden (12) der Basis (11) und in der offenen Plattenposition die Verbinder bildet, wobei die Lagerplatte (20) den Zugang zum ersten Fach (16) und zum vorverbundenen optischen Kabel (100) ermöglicht, und die Lagerplatte des Steckers von der Öffnung gelöst ist,
- der Boden (12) umfasst einen Kabelkanal (17) zum Durchführen eines Endabschnitts (100a) des vorverbundenen optischen Kabels (100) außerhalb der optischen Abschlussbox (10) zum ersten Fach (16),
**dadurch gekennzeichnet:**
- **dass** in der geschlossenen Plattenposition die Verbindungslagerplatte (20) relativ zur Öffnung (15) angeordnet ist, um den Durchgang eines oder mehrerer optischer Endbenutzerverbinder durch die Öffnung (15) zu ermöglichen, und wobei die Verbindungslagerplatte (20) einen Faserdurchgang (18) mit mindestens einer der Seitenwände (13d) zum Durchgang von optischen Fasern (101) des vorverbundenen optischen Kabels (100) vom ersten Fach (16) zur zweiten Oberfläche (22) bildet.

2. Optische Anschlussbox (10) nach Anspruch 1, wobei in der geschlossenen Plattenposition die erste Oberfläche (21) der Verbindungslagerplatte (20) zum Boden (12) der Basis (11) zeigt.

3. Optische Anschlussbox (10) nach einem der Ansprüche 1 bis 2, wobei:
- wenn sich die Verbindungslagerplatte (20) in der geschlossenen Position befindet, sind die optischen Verbinder (102) vor der Öffnung (15) angeordnet, wodurch der Zugang von außen zu den optischen Verbindern (102) ermöglicht wird.

4. Optische Anschlussbox (10) nach einem der Ansprüche 1 bis 3, wobei:
- ein Spleißfach (30) drehbar an der Basis (11) angebracht ist und so konfiguriert ist, dass es sich zwischen einer geschlossenen Fachposition und einer offenen Fachposition dreht,
- in der geschlossenen Fachposition bedeckt das Spleißfach (30) zumindest teilweise die zweite Oberfläche (22) der Verbindungslagerplatte (20) des Verbinders und bildet ein zweites Fach (26),
- in der Position des offenen Fachs ermöglicht das Spleißfach (30) den Zugang zur zweiten Oberfläche (22) der Verbindungslagerplatte (20).

5. Optische Anschlussbox (10) nach Anspruch 4, wobei:
- der Faserdurchgang (18) zum Durchgang mehrerer optischer Fasern (101) zwischen dem ersten Abteil (16) und dem zweiten Abteil (26) angeordnet ist.

6. Optische Anschlussbox (10) nach einem der Ansprüche 1 bis 5, wobei
- die Vielzahl von Verbinderstützrahmen (14) eine erste Gruppe von Verbinderstützrahmen (14a) und eine zweite Gruppe von Verbinderstützrahmen (14b) umfasst,
- die erste Gruppe von Verbinderstützrahmen (14a) auf der ersten Oberfläche (21) der Verbindungslagerplatte (20) vorgesehen ist, und die zweite Gruppe von Verbinderstützrahmen (14b) auf der zweiten Oberfläche (22) der Verbindungslagerplatte (20), wobei der Zugang zur zweiten Gruppe von Verbinderstützrahmen (14b) in der geschlossenen und offenen Plattenposition und der Zugang zur ersten Gruppe von Verbinderstützrahmen (14a) nur in der offenen Plattenposition zulässig ist.

7. Optische Anschlussanordnung (1), umfassend:
- eine optische Anschlussbox (10) gemäß den Ansprüchen 1 bis 6,
- ein vorverbundenes optisches Kabel (100) mit einem Endabschnitt (100a), der in der optischen Anschlussbox (10) untergebracht ist, wobei der Endabschnitt (100a) mehrere optische Fasern (101) umfasst, die mit einer entsprechenden Vielzahl von optischen Verbindern verbunden sind (102), wobei die Vielzahl von Verbinderstützrahmen (14) die Vielzahl von optischen Verbindern (102) unterstützt.

8. Optische Anschlussanordnung (1) nach Anspruch 7, wobei
- die Vielzahl von Verbinderstützrahmen (14) eine erste Gruppe von Verbindertragrahmen (14a) und eine zweite Gruppe von Verbindertragrahmen (14b) umfasst, die jeweils eine erste Gruppe von optischen Verbindern (102a) und eine zweite Gruppe von optischen Verbindern (102b) der mehreren optischen Verbinder (102) tragen,
- die erste Gruppe von Verbinderstützrahmen (14a) ist auf der ersten Oberfläche (21) vorgesehen, und die zweite Gruppe von Verbinderstützrahmen (14b) ist auf der zweiten Oberfläche (22) vorgesehen, wodurch der Zugang zur zweiten Gruppe von Verbinderstützrahmen (14b) und zur jeweiligen zweiten Gruppe von optischen Verbindern (102b) in den geschlossenen und offenen Plattenpositionen zulässig ist.

## Revendications

1. Boîtier de terminaison optique (10) comprenant :
- une base (11) avec un fond (12) et des parois latérales (13a, 13b, 13c, 13d),
- une pluralité de cadres de support de connecteur (14) configurée pour supporter des connecteurs optiques (102) d'un câble optique préconnectorisé (100) ayant une pluralité de fibres optiques (101),
- une ouverture (15) formée dans une des parois latérales (13a) permettant d'autoriser un accès à partir de l'extérieur auxdits connecteurs optiques (102),
- un panneau de support des connecteurs (20) retenant la pluralité de cadres de support de connecteur (14) et étant attaché de manière rotative à la base (11) entre une position de panneau fermée et une position de panneau ouverte, le panneau de support des connecteurs (20) ayant une première surface (21) et une seconde surface (22) opposée,
dans lequel, dans la position de panneau fermée, la première surface (21) du panneau de support des connecteurs (20) forme un premier compartiment (16) avec le fond (12) de la base (11), et dans la position de panneau ouverte, le panneau de support des connecteurs (20) autorise un accès au premier compartiment (16) et au câble optique préconnectorisé (100) et le panneau de support des connecteurs est dégagé de l'ouverture,
- le fond (12) comprend une voie de passage de câble (17) pour un passage d'une partie d'extrémité (100a) du câble optique préconnectorisé (100) à partir de l'extérieur du boîtier de terminaison optique (10) jusqu'au premier compartiment (16),
**caractérisé en ce que** :
- dans la position de panneau fermée, le panneau de support des connecteurs (20) est agencé par rapport à l'ouverture (15) pour autoriser un passage d'un ou plusieurs connecteurs optiques d'utilisateur final à travers l'ouverture (15), et le panneau de support des connecteurs (20) forme une voie de passage de fibres (18) avec au moins une des parois latérales (13d), pour un passage de fibres optiques (101) du câble optique préconnectorisé (100) à partir du premier compartiment (16) jusqu'à la seconde surface (22).

2. Boîtier de terminaison optique (10) selon la revendication 1, dans lequel, dans la position de panneau fermée, la première surface (21) du panneau de support des connecteurs (20) fait face au fond (12) de la base (11).

3. Boîtier de terminaison optique (10) selon l'une quelconque des revendications 1 et 2, dans lequel :
- lorsque le panneau de support des connecteurs (20) est dans la position fermée, les connecteurs optiques (102) sont agencés devant l'ouverture (15), moyennant quoi un accès à partir de l'extérieur aux connecteurs optiques (102) est autorisé.

4. Boîtier de terminaison optique (10) selon l'une quelconque des revendications 1 à 3, dans lequel :
- un plateau d'épissurage (30) est attaché de manière rotative à la base (11) et configuré pour tourner entre une position de plateau fermée et une position de plateau ouverte,
- dans la position de plateau fermée, le plateau d'épissurage (30) couvre au moins partiellement la seconde surface (22) du panneau de support des connecteurs (20) formant un second compartiment (26),
- dans la position de plateau ouverte, le plateau d'épissurage (30) autorise un accès à la seconde surface (22) du panneau de support des connecteurs (20).

5. Boîtier de terminaison optique (10) selon la revendication 4, dans lequel :
la voie de passage de fibres (18) est agencée pour un passage d'une pluralité de fibres optiques (101) entre le premier compartiment (16) et le second compartiment (26).

6. Boîtier de terminaison optique (10) selon l'une quelconque des revendications 1 à 5, dans lequel
- la pluralité de cadres de support de connecteur (14) comprend un premier groupe de cadres de support de connecteur (14a) et un second groupe de cadres de support de connecteur (14b),
- le premier groupe de cadres de support de connecteur (14a) est prévu sur la première surface (21) du panneau de support des connecteurs (20) et le second groupe de cadres de support de connecteur (14b) est prévu sur la seconde surface (22) du panneau de support des connecteurs (20), moyennant quoi un accès au second groupe de cadres de support de connecteur (14b) est autorisé dans les positions de panneau fermée et ouverte et un accès au premier groupe de cadres de support de connecteur (14a) est autorisé seulement dans la position de panneau ouverte.

7. Ensemble de terminaison optique (1) comprenant :
- un boîtier de terminaison optique (10) selon l'une quelconque des revendications 1 à 6,
- un câble optique préconnectorisé (100) ayant une partie d'extrémité (100a) logée dans le boîtier de terminaison optique (10), la partie d'extrémité (100a) comprenant une pluralité de fibres optiques (101) connectée à une pluralité de connecteurs optiques (102) correspondante,
dans lequel la pluralité de cadres de support de connecteur (14) supporte la pluralité de connecteurs optiques (102).

8. Ensemble de terminaison optique (1) selon la revendication 7, dans lequel
- la pluralité de cadres de support de connecteur (14) comprend un premier groupe de cadres de support de connecteur (14a) et un second groupe de cadres de support de connecteur (14b) supportant respectivement un premier groupe de connecteurs optiques (102a) et un second groupe de connecteurs optiques (102b) de la pluralité de connecteurs optiques (102),
- le premier groupe de cadres de support de connecteur (14a) est prévu sur la première surface (21) et le second groupe de cadres de support de connecteur (14b) est prévu sur la seconde surface (22), moyennant quoi un accès au second groupe de cadres de support de connecteur (14b) et au second groupe de connecteurs optiques (102b) respectif est autorisé dans les positions de panneau fermée et ouverte et un accès au premier groupe de cadres de support de connecteur (14a) et au premier groupe de connecteurs optiques (102a) respectif est autorisé seulement dans la position de panneau ouverte.
